# EUROPÄISCHE PATENTANMELDUNG

(11) **EP 1 914 414 A2**
(43) Veröffentlichungstag der Anmeldung: **23.04.2008**
(21) Anmeldenummer: 07116718.3
(22) Anmeldetag: 19.09.2007
(51) Int. Cl.: F02D 41/40

(54) **Einspritzsystem und Verfahren zum Betreiben eines Einspritzsystems**

(30) Priorität: 10.10.2006 DE 102006048174
(71) Anmelder: ROBERT BOSCH GMBH, 70442 Stuttgart (DE)
(72) Erfinder: Schulz, Udo, 71665 Vaihingen/Enz (DE); Gfroerer, Edgar, 71522 Backnang (DE); Barnickel, Kai, 70619 Stuttgart (DE)

(57) **Zusammenfassung**

Die vorliegende Erfindung betrifft ein Einspritzsystem (28) zur Ansteuerung der Zylinder eines Verbrennungsmotors (133), aufweisend einen Multi-Core Prozessor (25) mit einer Mehrzahl von Hauptprozessoren (26, 27), wobei im Betrieb des Verbrennungsmotors (133) Kraftstoff in die Zylinder wenigstens zweier verschiedener Einspritztypen (5-13) eingespritzt wird, der Multi-Core Prozessor (25) während synchron zur Stellung der Kurbelwelle des Verbrennungsmotors (133) erzeugter statischer Interrupts (1-4) die Ansteuerbeginne der Einspritztypen (5-13) und während dynamischer Interrupts (14-22) mit einer höheren Priorität als die statischen Interrupts (1-4) die Ansteuerdauern der Einspritztypen (5-13) berechnet, und die Berechnung der Ansteuerbeginne und - dauern auf die Hauptprozessoren (26, 27) verteilt ist. Die Erfindung betrifft auch ein Verfahren zum Ansteuern von Einspritzvorgängen eine Mehrzahl von Einspritztypen (5-13) für die Zylinder eines Verbrennungsmotors (133).

## Beschreibung

Die vorliegende Erfindung betrifft ein Einspritzsystem, insbesondere ein Common-Rail Einspritzsystem und ein Verfahren zum Betreiben eines Einspritzsystems, insbesondere eines Common-Rail Einspritzsystems.

### STAND DER TECHNIK

Unter einem Common-Rail Einspritzsystem, das auch als Speichereinspritzsystem bezeichnet wird, versteht man ein Einspritzsystem für Verbrennungsmotoren, bei denen eine Hochdruckpumpe den Kraftstoff auf ein relativ hohes Druckniveau bringt. Der Begriff "Common Rail" beschreibt die Verwendung einer gemeinsamen Kraftstoff-Hochdruckleitung mit entsprechenden Abgängen zur Versorgung der Zylinder des Verbrennungsmotors. Somit ist die Kraftstoffförderung von der Einspritzung getrennt.

Ein solches Einspritzsystem umfasst eine Einspritzsteuerung, die den Einspritzzeitpunkt und die Einspritzmenge des Kraftstoffs in die Zylinder steuert. Die Einspritzsteuerung errechnet aus Zuständen des Motors, wie z.B. dem Druck in der gemeinsamen Kraftstoff-Hochdruckleitung, die Einspritzzeitpunkte und -dauern für die Haupteinspritzung und gegebenenfalls für eine oder mehrere Voreinspritzungen oder Nacheinspritzungen.

Diese Berechnungen werden üblicherweise von einem Single-Core-Prozessor (Einzelkernprozessor) der Einspritzsteuerung durchgeführt. Ein Single-Core-Prozessor ist ein Prozessor mit einem einzigen Hauptprozessor (CPU, Central Processing Unit).

Für die Einspritzsteuerung verwendet der Single-Core-Prozessor ein Interrupt-Konzept, das so genannte dynamische und statische Interrupts umfasst. Unter einem Interrupt versteht man im Allgemeinen eine kurzfristige Unterbrechung eines Programms durch eine von dem Hauptprozessor abzuarbeitende Befehlssequenz, die Unterbrechungsroutine (Interrupt Service Routine, ISR). Anschließend wird die Ausführung des Programms an der Unterbrechungsstelle fortgesetzt.

Für das Einspritzsystem werden die statischen Interrupts des Single-Core-Prozessors synchron zur Kurbelwellenstellung des Verbrennungsmotors in gleichen Winkelabständen erzeugt. Insbesondere werden die statischen Interrupts in einem zeitlichen Abstand voneinander erzeugt, der einem Winkel α von 720° Kurbelwelle dividiert durch die Anzahl der Zylinder des Verbrennungsmotors entspricht. Somit wird ein statischer Interrupt vor dem oberen Totpunkt des entsprechenden Zylinders erzeugt.

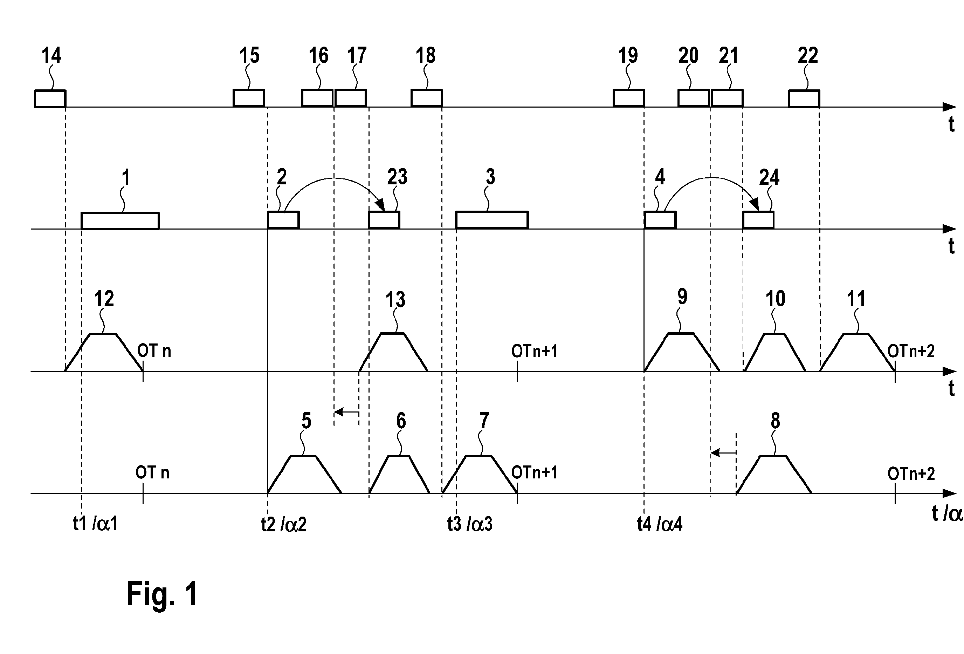

Die statischen Interrupts dienen u. A. zur Berechnung der Ansteuerbeginne der einzelnen Einspritztypen (Haupteinspritzung, gegebenenfalls Vor- und Nacheinspritzungen) der jeweiligen Zylinder. Für die Berechnung des jeweiligen Ansteuerbeginns wird derjenige statische Interrupt verwendet, der unter Berücksichtigung der Laufzeiten vor dem jeweiligen Ansteuerbeginn liegt. Dies ist in der Fig. 1 veranschaulicht, bei dem ein Einspritzsystem mit einem Single-Core-Prozessor eine Haupteinspritzung, zwei Voreinspritzungen und eine Nacheinspritzung pro Zylinder abgibt.

In dem in der Fig. 1 gezeigten Ausschnitt einer Ablaufsteuerung eines Einspritzsystems mit einem Single-Core-Prozessor sind vier aufeinander folgende statische Interrupts 1-4 dargestellt, die zu den Zeitpunkten t1, t2, t3, t4, entsprechend den Winkeln α1, α2, α3, α4, beginnen. Die Winkelabstände zwischen den einzelnen statischen Interrupts 1-4 sind drehzahlabhängig konstant.

Während des statischen Interrupts 1 berechnet der Single-Core-Prozessor im vorliegenden Beispiel die Ansteuerbeginne für die beiden aufeinander folgenden Voreinspritzungen 5, 6 für den (n+1)-ten Zylinder und während des darauf folgenden statistischen Interrupts 2 die Ansteuerbeginne der Haupteinspritzung 7 und der Nacheinspritzung 8 des (n+1)-ten Zylinder. Während des nachfolgenden statischen Interrupts 3 berechnet der Single-Core-Prozessor die Ansteuerbeginne für die beiden aufeinander folgenden Voreinspritzungen 9, 10 für den (n+2)-ten Zylinder und während des nächsten statistischen Interrupts 4 die Ansteuerbeginne der Haupteinspritzung 11 und der nicht gezeigten Nacheinspritzung des (n+2)-ten Zylinder. Die Fig. 1 zeigt ferner die Haupteinspritzung 12 und die Nacheinspritzung 13 des n-ten Zylinders, die der Single-Core-Prozessor während eines nicht gezeigten weiteren statischen Interrupts berechnet.

Die Einspritzmenge kann u. A. vom Druck in der Kraftstoff-Hochdruckleitung (Raildruck) zum Zeitpunkt des Einspritzbeginns und während der Einspritzung abhängen. Demnach sollte vor dem unmittelbaren Einspritzbeginn die Einspritzmenge mittels der Ansteuerdauer als Funktion des Raildrucks korrigiert bzw. berechnet werden. Diese Berechnung der Ansteuerdauern führt der Single-Core-Prozessor innerhalb der dynamischen Interrupts durch. Der Raildruck wird u. A. von der Förderung der Hochdruckpumpe und der Druckwelle in Zuleitungen beeinflusst.

Laufzeiten des Single-Core-Prozessors um die oberen Totpunkte der Zylinder, insbesondere bei einer Überlagerung von mehr als einem dynamischen Interrupt müssen im Zeitabstand des dynamischen Interrupts vor dem Einspritzbeginn vorgehalten werden. Zeitpunkte der oberen Totpunkte der entsprechenden Zylinder sind in der Fig. 1 mit OTn, OTn+1 und OTn+2 bezeichnet.

Der dynamische Interrupt hat in der Regel die höchste Priorität und unterbricht alle anderen Anwendungen des Single-Core-Prozessors einschließlich der statischen Interrupts 1-4. Mehrere und relativ dicht aufeinander folgende Einspritztypen, z.B. eine Voreinspritzung eines Zylinders und eine Nacheinspritzung eines weiteren Zylinders, können zur Überlappung von dynamischen Interrupts des Single-Core-Prozessors führen. Gleiches gilt, wenn die Laufzeit eines dynamischen Interrupts länger als die Ansteuerdauer ist, und die Einspritztypen dicht aufeinander folgen. Da ein Single-Core-Prozessor die Interrupts nur sequenziell abarbeiten kann, muss der Vorhalt aller dynamischen Interrupts vor dem Ansteuerbeginn so lange wie die Laufzeit aller dynamischer Interrupts sein, die sich überlappen können.

Das Berechnungsende und damit das Ende der Unterbrechungsroutine (ISR) muss deshalb ungefähr mit Ansteuerbeginn abgeschlossen sein, da relativ kurze Ansteuerdauern, z.B. für Voreinspritzungen, möglich sind und damit auf den Ansteuerbeginn unmittelbar das Ansteuernde folgen kann. Dies ist in der Fig. 1 veranschaulicht, die dynamische Interrupts 14-22 zeigt. Dabei berechnet der Single-Core-Prozessor im vorliegenden Beispiel während des dynamischen Interrupts 14 die Ansteuerdauer der Haupteinspritzung 12 des n-ten Zylinders, während des dynamischen Interrupts 15 die Ansteuerdauer der Voreinspritzung 5 des (n+1)-ten Zylinders, während des dynamischen Interrupts 16 die Ansteuerdauer der Nacheinspritzung 13 des n-ten Zylinders, während des dynamischen Interrupts 17 die Ansteuerdauer der Voreinspritzung 6 des (n+1)-ten Zylinders, während des dynamischen Interrupt 18 die Ansteuerdauer der Haupteinspritzung 7 des (n+1)-ten Zylinders, während des dynamischen Interrupts 19 die Ansteuerdauer der Voreinspritzung 9 des (n+2)-ten Zylinders, während des dynamischen Interrupts 20 die Ansteuerdauer der Nacheinspritzungen 8 des (n+1)-ten Zylinders, während des dynamischen Interrupts 21 die Ansteuerdauer der Voreinspritzung 10 des (n+2)-ten Zylinders und während des dynamischen Interrupts 22 die Ansteuerdauer der Haupteinspritzung 11 des (n+1)-ten Zylinders.

Wie es aus der Fig. 1 ersichtlich ist, unterbricht im gezeigten Beispiel der dynamische Interrupt 16 zur Berechnung der Ansteuerdauer der Nacheinspritzung 13 des n-ten Zylinders und der darauf folgende dynamische Interrupt 17 zur Berechnung der Ansteuerdauer der Voreinspritzung 6 des (n+1)-ten Zylinders den statischen Interrupt 2 zur Berechnung der Ansteuerbeginne der Haupt- und Nacheinspritzungen 7, 8 des (n+1)-ten Zylinders. Der unterbrochene statische Interrupt 2 wird nach dem Ende des dynamischen Interrupts 17 zur Berechnung der Ansteuerdauer der Voreinspritzung 6 des (n+1)-ten Zylinders fortgeführt, was mit dem Bezugszeichen 23 veranschaulicht ist.

In dem in der Fig. 1 gezeigten Beispiel unterbricht außerdem der dynamische Interrupt 20 zur Berechnung der Ansteuerdauer der Nacheinspritzung 8 des (n+1)-ten Zylinders und der darauf folgende dynamische Interrupt 21 zur Berechnung der Ansteuerdauer der Voreinspritzung 10 des (n+2)-ten Zylinders den statischen Interrupt 4 zur Berechnung der Ansteuerbeginne der Haupt- und (Nacheinspritzungen) 11 des (n+2)-ten Zylinders. Der unterbrochene statische Interrupt 4 wird nach dem Ende des dynamischen Interrupts 21 zur Berechnung der Ansteuerdauer der Voreinspritzung 10 des (n+2)-ten Zylinders fortgeführt, was mit dem Bezugszeichen 24 veranschaulicht ist.

Zunehmend variablere Einspritzabstände, eine zunehmende Anzahl von Zylindern oder eine zunehmende Anzahl von Einspritztypen kann zu einer größeren Anzahl von Überlappungen von Interrupts und auch zu Kollisionen führen.

Die DE 102 49 581 A1 offenbart ein Verfahren und eine Vorrichtung zum Umschalten zwischen wenigstens zwei Betriebsmodi einer Prozessoreinheit. Die Prozessoreinheit umfasst wenigstens zwei Ausführeinheiten zur Aufarbeitung von Programmen. Wenigstens den Programmen ist wenigstens eine Kennung zugeordnet, die eine Unterscheidung in die wenigstens zwei Betriebsmodi erlaubt. Eine Umschaltung zwischen den Betriebsmodi in Abhängigkeit von der Kennung erfolgt, sodass die Prozessoreinheit die Programme entsprechend des zugeordneten Betriebsmodus abarbeitet.

### OFFENBARUNG DER ERFINDUNG

Gemäß der Erfindung weist ein Einspritzsystem zur Ansteuerung der Zylinder eines Verbrennungsmotors einen Multi-Core-Prozessor mit einer Mehrzahl von Hauptprozessoren auf, wobei im Betrieb des Verbrennungsmotors Kraftstoff in die Zylinder während wenigstens zweier verschiedener Einspritztypen eingespritzt wird, der Multi-Core-Prozessor während synchron zur Stellung der Kurbelwelle des Verbrennungsmotors erzeugter statischer Interrupts die Ansteuerbeginne der Einspritztypen und während dynamischer Interrupts mit einer höheren Priorität als die statischen Interrupts die Ansteuerdauern der Einspritztypen berechnet, und die Berechnung der Ansteuerbeginne und - dauern auf die Hauptprozessoren verteilt ist.

Die Erfindung stellt auch ein Verfahren zum Ansteuern von Einspritzvorgängen einer Mehrzahl von Einspritztypen für die Zylinder eines Verbrennungsmotors bereit, aufweisend folgende Verfahrensschritte:
- Erzeugen von synchron zur Stellung der Kurbelwelle des Verbrennungsmotors statischen Interrupts, während derer ein eine Mehrzahl von Hauptprozessoren aufweisender Multi-Core-Prozessor die Ansteuerbeginne für Einspritzvorgänge der Mehrzahl von Einspritztypen für die Zylinder eines Verbrennungsmotors berechnet, und
- Erzeugen von dynamischen Interrupts mit einer höheren Priorität als die statischen Interrupts, während derer der Multi-Core-Prozessor die Ansteuerdauern für die Einspritzvorgänge berechnet, wobei die Berechnung der Ansteuerbeginne und - dauern auf die Hauptprozessoren verteilt ist.

Erfindungsgemäß weist das Einspritzsystem für den Verbrennungsmotor den Multi-Core-Prozessor auf. Ein Multi-Core-Prozessor ist allgemein ein Mikroprozessor mit mehreren vollständigen Hauptprozessoren (CPU, Haupt Central Processing Unit) auf einem einzigen Chip. Im Wesentlichen sind sämtliche Ressourcen repliziert. Es handelt sich also um mehrere vollständige, weitgehend unabhängigen Hauptprozessoren. Umfasst der Multi-Core-Prozessor zwei Hauptprozessoren, dann wird dieser auch als Dual-Core-Prozessor bezeichnet.

Der Multi-Core-Prozessor weist mehrere Hauptprozessoren auf, die unabhängig voneinander Berechnungen durchführen können. Erfindungsgemäß teilen sich die Hauptprozessoren die Berechnungen der Ansteuerbeginne und -dauern für die Einspritztypen des Verbrennungsmotors. Einspritztypen sind vor allem Haupteinspritzungen und wenigstens eine der jeweiligen Haupteinspritzung vorangehende Voreinspritzung für die einzelnen Zylinder. Es können jedoch auch mehrere Voreinspritzungen appliziert werden und/oder eine oder mehrere Nacheinspritzungen, die nach einer Haupteinspritzung in den jeweiligen Zylinder gespritzt wird bzw. werden.

Die Ansteuerbeginne der einzelnen Einspritztypen werden während der statischen Interrupts berechnet, die synchron zum Kurbelwellenwinkel der Kurbelwelle des Verbrennungsmotors von den entsprechenden Hauptprozessoren erzeugt werden. Die Ansteuerdauern werden dagegen während der dynamischen Interrupts berechnet, die eine höhere Priorität haben als die statischen Interrupts und daher diese auch gegebenenfalls unterbrechen. Anstelle der Ansteuerdauern können auch die entsprechenden Ansteuerenden berechnet werden.

Dadurch, dass erfindungsgemäß verschiedene dieser Berechnungen von den Hauptprozessoren des Multi-Core Prozessors gegebenenfalls auch parallel durchgeführt werden können, kann der zeitliche oder in Grad Kurbelwinkel notwendige Vorhalt zur Berechnung des Ansteuerndes oder der Ansteuerdauer geringer gehalten werden. Somit stehen aktuelle Daten für die Berechnung zur Verfügung. Jitter infolge von Unterbrechungen und/oder Kollisionen könne vermieden werden und das Laufzeitverhalten des Prozessors kann besser vorhersehbar sein.

Durch die Verteilung der Berechnungen auf die beiden bzw. mehr als zwei Hauptprozessoren verringert sich die Gefahr von Überlappungen der Interrupts im Vergleich zu einer Verwendung eines Single-Core-Prozessors.

Das erfindungsgemäße Einspritzsystem ist insbesondere für einen Comon-Rail Verbrennungsmotor und besonders für einen Common-Rail Dieselmotor geeignet.

Dem Verbrennungsmotor werden die Einspritzungen der verschiedenen Einspritztypen appliziert. Nach einer Ausführungsform des erfindungsgemäßen Einspritzsystems berechnet jeweils ein Hauptprozessor die Ansteuerbeginne und -dauern eines Einspritztyps der Einspritztypen. Das erfindungsgemäße Verfahren kann folgenden Verfahrensschritt aufweisen: Berechnen der Ansteuerbeginne und -dauern eines Einspritztyps mit jeweils einem der Hauptprozessoren des Multi-Core Prozessors .

D.h. jeder Einspritztyp ist jeweils einem der Hauptprozessoren fest zugewiesen. Werden z. B. zwei Einspritztypen verwendet, dann umfasst der Multi-Core Prozessor zwei Hauptprozessoren, wobei der eine Hauptprozessoren die Ansteuerbeginne während der statischen Interrupts und die Ansteuerdauern während der dynamischen Interrupts des einen Einspritztyps und der andere Hauptprozessor die Ansteuerbeginne und -dauern des anderen Einspritztyps berechnet. Gleiche Einspritztypen der Zylinder überlappen sich in der Regel nicht. Daher ergeben sich auch keine Überlappungen, wenn ein Hauptprozessor alle Berechnungen für einen Einspritztyp aller Zylinder durchführt. Vorteilhaft ist diese Variante dann, wenn die Rechenzeit und damit die Dauer der dynamischen Interrupts relativ groß ist und eine Aneinanderreihung der Laufzeiten aller dynamischen Interrupts mit einem Single-Core Prozessor nicht mehr darstellbar ist bzw. der Abstand bzw. Zeit/Winkel-Vorhalt der dynamischen Interrupts zum Einspritzbeginn zu groß wird.

Die drehzahlsynchronen nicht zylinderspezifischen Regler und Funktionen können dann abwechselnd von den Hauptprozessoren gerechnet werden. Vorteilhaft werden diese z.B. von dem Hauptprozessor gerechnet, der gerade keine Einspritzberechnung (Ansteuerbeginnberechnung und Ansteuerdauerberechnung bzw. Ansteuerendeberechnung) durchführt. Die Regler können während der statischen oder auch während der dynamischen Interrupts berechnet werden.

Nach einer Variante des erfindungsgemäßen Einspritzsystems bzw. des erfindungsgemäßen Verfahrens sind der Zündfolge der Einspritztypen entsprechend alternierend die den Zylindern zugeordneten Interrupts den Hauptprozessoren zugeordnet. Durch diese Aufteilung der Berechnungen auf die Hauptprozessoren ist es z.B. möglich, eine Überlappung von dynamischen Interrupts einer späten Nacheinspritzung mit den dynamischen Interrupts einer frühen Voreinspritzung zweier nachfolgender Zylinder zu vermeiden. Im Prinzip entspricht dies einer Entflechtung eines Zweibank Hardware Einspritzendstufenkonzeptes. Die dem Zylinder zugehörigen statischen und dynamischen Unterbrechungsroutinen (Interrupt Service Routine, ISR) werden auf den jeweiligen Hauptprozessoren gerechnet.

Die drehzahlsynchronen nicht zylinderspezifischen Regler und Funktionen können dann abwechselnd von den Hauptprozessoren gerechnet werden. Vorteilhaft werden diese z.B. von dem Hauptprozessor gerechnet, der gerade keine Einspritzberechnung (Ansteuerbeginnberechnung und Ansteuerdauerberechnung bzw. Ansteuerendeberechnung) durchführt.

Der Verbrennungsmotor kann mehrere Einspritzbänke mit wenigstens einem Zylinder aufweisen. Unter einer Einspritzbank versteht man eine Reihe von Zylindern in einem Motorblock. Im Extremfall kann eine Einspritzbank einen einzigen Zylinder umfassen. Gemäß einer Ausführungsform des erfindungsgemäßen Einspritzsystems ist jeder Einspritzbank ein Hauptprozessor zur Berechnung der Ansteuerzeitpunkte und -dauern der entsprechenden Zylinder zugeordnet. Nach einer Variante des erfindungsgemäßen Verfahrens weist dies folgenden Verfahrensschritt auf: Berechnen der Ansteuerbeginne und -dauern für die Zylinder jeweils einer Einspritzbank mit genau einem der Hauptprozessoren. Somit werden zur Vermeidung von Überlappungen der dynamischen Interrupts die Berechnungen für die Einspritzungen auf die Einspritzbänke verteilt, indem ein Hauptprozessor die Einspritzungen für die Zylinder einer Einspritzbank und ein anderer Hauptprozessor die Einspritzungen für die Zylinder einer weiteren Einspritzbank berechnet.

Jedem Zylinder kann auch ein Hauptprozessor zur Berechnung der Ansteuerzeitpunkte und -dauern des entsprechenden Zylinder zugeordnet sein.

Nach einer weiteren Variante des erfindungsgemäßen Einspritzsystems sind die statischen Interrupts einem ersten Hauptprozessor der Mehrzahl von Hauptprozessoren und die dynamischen Interrupts einem zweiten Hauptprozessor der Mehrzahl von Hauptprozessoren zugeordnet. Das erfindungsgemäße Verfahren kann folgende Verfahrensschritte aufweisen:
- Berechnen der Ansteuerbeginne der Einspritztypen während der statischen Interrupts mit einem ersten Hauptprozessor der Mehrzahl von Hauptprozessoren und
- Berechnen der Ansteuerdauern der Einspritztypen während der dynamischen Interrupts mit einem zweiten Hauptprozessor der Mehrzahl von Hauptprozessoren

Somit können die auf dem ersten Hauptprozessor laufenden statischen Interrupts nicht von einem auf dem zweiten Hauptprozessor laufenden dynamischen Interrupt unterbrochen werden. Demnach ist es möglich, den Vorhalt eines statischen Interrupts näher vor dem frühesten zugelassenen applizierten Ansteuerbeginn des jeweiligen Einspritztyps, verringert um die Laufzeit der unterbrechenden dynamischen Interrupts, zu legen. Die Werte für den Ansteuerbeginn können demnach genauer berechnet werden.

Die Einspritztypen können eine Haupteinspritzung, eine der Haupteinspritzung vorangehende Voreinspritzung und wenigstens eine der Haupteinspritzung nachfolgende Nacheinspritzung umfassen. Gemäß einer weiteren Ausführungsform des erfindungsgemäßen Einspritzsystems berechnet ein erster Hauptprozessor der Mehrzahl von Hauptprozessoren die Ansteuerbeginne und -dauern der wenigstens einen Voreinspritzung und ein zweiter Hauptprozessor der Mehrzahl von Hauptprozessoren die Ansteuerbeginne und -dauern der Haupteinspritzung und der wenigstens einen Nacheinspritzung.

Das erfindungsgemäße Verfahren kann dann folgende Verfahrensschritte aufweisen:
- Berechnen der Ansteuerbeginne und -dauern der Voreinspritzungen mit einem ersten Hauptprozessor der Mehrzahl von Hauptprozessoren und
- Berechnen der Ansteuerbeginne und -dauern der Haupt- und Nacheinspritzungen mit einem zweiten Hauptprozessor der Mehrzahl von Hauptprozessoren

Somit sind die Berechnungen für die Voreinspritzungen und den Nacheinspritzungen durch die entsprechenden Unterbrechungsroutinen (Interrupt Service Routine, ISR) entflechtet, wodurch Überlappungen vermieden werden können. Dadurch ist es möglich, die Vorhalte der dynamischen Interrupts kleiner zu wählen.

Nach einer weiteren Variante des erfindungsgemäßen Einspritzsystems bzw. des erfindungsgemäßen Verfahrens werden die Berechnungen der Ansteuerbeginne und Ansteuerdauern den verschiedenen Hauptprozessoren der Mehrzahl von Hauptprozessoren dynamisch zugewiesen. Insbesondere können die Berechnungen der Ansteuerbeginne und Ansteuerdauern den verschiedenen Hauptprozessoren der Mehrzahl von Hauptprozessoren derart dynamisch zugewiesen werden, dass stets der Anzahl von Hauptprozessoren entsprechend die Anwendungen der Interrupts mit den zur Zeit höchsten Prioritäten durchgeführt werden. Grundgedanke dieser Variante ist es, dass immer ein Hauptprozessor die Anwendung mit der höchsten Priorität bearbeitet und der andere Hauptprozessor oder die anderen Hauptprozessoren die Anwendung bzw. Anwendungen mit der nächst niedrigeren Priorität bzw. späteren Priorität. Ein Beispiel ist ein dynamischer Interrupt für eine Nacheinspritzung des aktuellen Zylinders und ein überlappender dynamischer Interrupt für eines Voreinspritzung des nächsten Zylinders.

Dabei ist nicht fixiert, welche Anwendung (Task) auf welchem Hauptprozessor abgearbeitet wird. Zur Laufzeit des Systems bearbeitet einer der Hauptprozessoren einen bestimmten Prozess in einer bestimmten Anwendung. Der zweite Hauptprozessor bearbeitet einen bestimmten Prozess in einer bestimmten Anwendung, die gerade niederpriorer ist. Gibt es eine Unterbrechungsanfrage (Interrupt Request, IRQ) z.B. einer Anwendung, die höherpriorer als die auf den beiden Hauptprozessoren ist, dann wird der Prozess in der niederprioren Anwendung von beiden Hauptprozessoren, also hier vom zweiten Hauptprozessor fertig bearbeitet (kooperativ) oder unterbrochen (preemtiv) und die Resource des zweiten Hauptsprozessors an die höherpriore Anwendung vergeben. Letztendlich sind immer die zwei höchstprioren Anwendungen gleichzeitig in Bearbeitung. Weitere Varianten, insbesondere mit mehr als zwei Hauptprozessoren sind denkbar.

Das so genannte Scheduling läuft dabei auf allen Hauptprozessoren synchron ab, d.h. mit demselben Systemtakt, Winkel und Zeitbasis. Unter Scheduling bzw. Scheduling-Konfiguration versteht man die Information, welcher Prozess welchem folgen muss bzw. welche Nachricht vor welcher berechnet werden muss.

Nach einer weiteren Ausführungsform des erfindungsgemäßen Einspritzsystems führen wenigstens zwei Hauptprozessoren dieselbe Berechnung durch und die Ergebnisse beider Berechnungen werden gegenseitig plausibilisiert.

Dann können folgende Verfahrensschritte durchgeführt werden:
- Durchführen derselben Berechnung mit wenigstens zwei Hauptprozessoren und
- Plausibilisieren der Ergebnisse der Berechnungen durch Vergleichen der Ergebnisse der beiden Berechnungen.

Für ein Sicherheitskonzept kann es ferner wichtig sein, Berechnungen für die Ansteuerdauern bzw. Kraftstoffmengen für die entsprechenden Einspritztypen zu plausibilisieren oder wiederholt durchzuführen. Es kann daher zusätzlich vorgesehen sein, dass zwei Hauptprozessoren parallel kritische Berechnungen durchführen und anschließend der Multi-Core Prozessor die Ergebnisse dieser Berechnungen vergleicht. Es kann dann vorgesehen sein, dass die Ansteuerung für den Zylinder nur dann vorgenommen wird, wenn die beiden Ergebnisse übereinstimmen.

Eine andere Möglichkeit der Plausibilisierung ist es, dass einer der Hauptprozessoren die Ergebnisse eines anderen Hauptprozessors zurückrechnet, z.B. mittels inverser Algorithmen, inverser Kennfelder und Kennlinien, usw. Der Effekt/ Nutzen diese Variante ist eine relativ schnelle Rechnung und Plausibilisierung sicherheitskritischer Routinen.

### KURZE BESCHREIBUNG DER ZEICHNUNGEN:

- Fig. 1: zeigt ein Ablaufdiagramm eines Common-Rail Einspritzsystems mit einem Single-Core Prozessor;
- Fig. 2: zeigt ein Blockschaltbild eines Multi-Core Prozessor;
- Fig. 3-8: zeigen Ablaufdiagramme mehrerer Ausführungsformen eines Common-Rail Einspritzsystems mit einem Multi-Core Prozessor und
- Fig. 9: zeigt ein Kraftfahrzeug.

### AUSFÜHRUNGSFORMEN DER ERFINDUNG

Die Fig. 1 wurde bereits in der Beschreibungseinleitung erklärt.

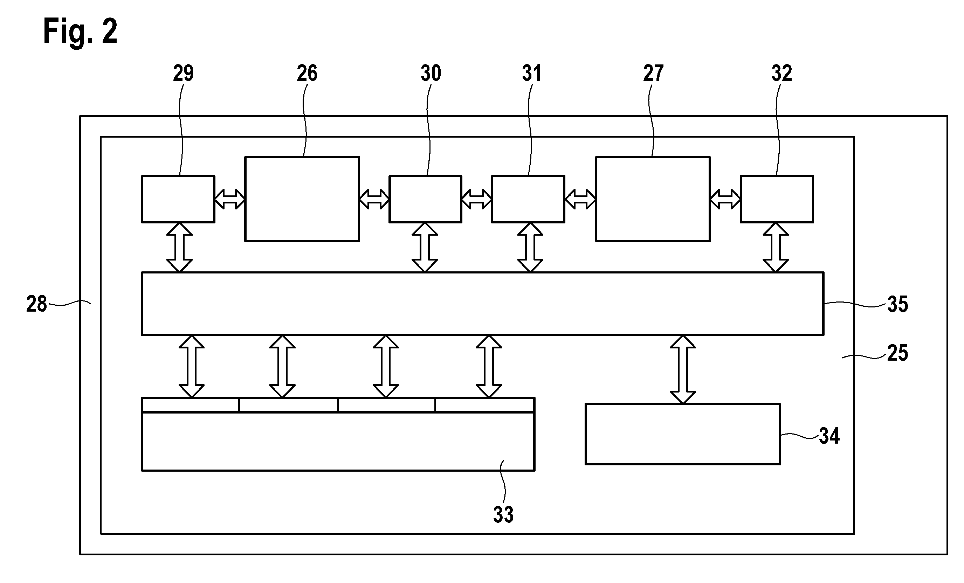

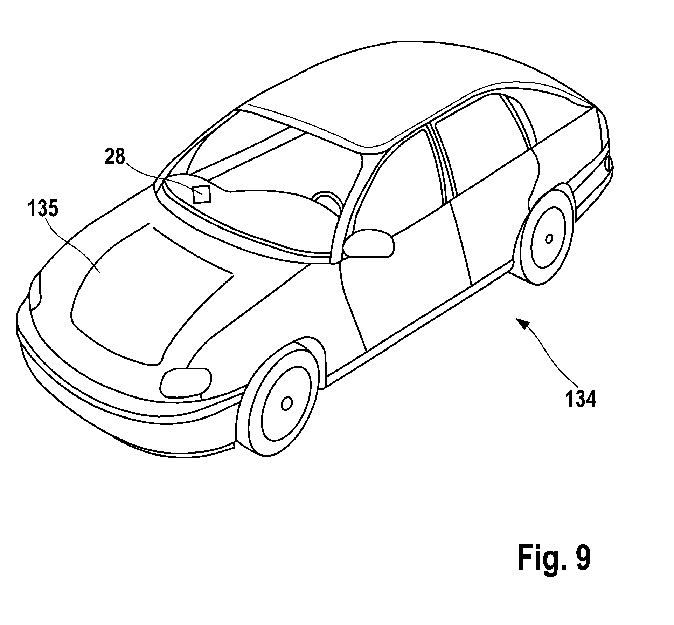

Die Fig. 2 zeigt ein Common-Rail Einspritzsystem 28 als Beispiel eines Einspritzsystems für einen in der Fig. 9 dargestellten Verbrennungsmotor 135, das Zylinder des Verbrennungsmotors 135 steuert. Die Berechnung von Einspritzbeginne und -dauern der Zylinder wird von einem Multi-Core Prozessors 25 durchgeführt. Ein Multi-Core Prozessor ist allgemein ein Mikroprozessor bzw. Mikrocontroller mit mehreren vollständigen Hauptprozessoren 26, 27 (CPU, Central Processing Unit) auf einem einzigen Chip. Sämtliche Ressourcen mit Ausnahme eines Busses und eventuell einiger nicht explizit gezeigten Caches sind repliziert. Es handelt sich also um mehrere vollständige, weitgehend unabhängigen Hauptprozessoren.

Im Falle des vorliegenden Ausführungsbeispiels sind exemplarisch zwei Hauptprozessoren 26, 27 des Multi-Core Prozessors 25 dargestellt. Je nach Anwendung umfasst der Multi-Core Prozessor 25 auch mehr als zwei Hauptprozessoren.

Im Unterschied zu dem in der Einleitung beschriebenen Single-Core Prozessor für ein Common-Rail Einspritzsystem, berechnet der Multi-Core Prozessor 25 die Einspritzbeginne und - dauern nicht mit einem einzigen Hauptprozessor, sondern mit seinen mehreren Hauptprozessoren 26, 27, auf denen entsprechende Rechenprogramme laufen.

Der in der Fig. 2 dargestellte Multi-Core Prozessor 25 weist eine erste Programmspeichereinheit (program memory unit) 29 und eine erste Datenspeichereinheit (data memory unit) 30 auf, die jeweils mit dem ersten Hauptprozessor 26 kommunizieren. Entsprechend weist der Multi-Core Prozessor 25 eine zweite Programmspeichereinheit 31 und eine zweite Datenspeichereinheit 32 auf, die jeweils mit dem zweiten Hauptprozessor 27 kommunizieren. Umfasst der Multi-Core Prozessor 25 mehr als zwei Hauptprozessoren, dann sind diesen im Falle des vorliegenden Ausführungsbeispiels ebenfalls Programmspeicher- und Datenspeichereinheiten zugeordnet.

Im Falle des vorliegenden Ausführungsbeispiels weist der Multi-Core Prozessor 25 noch einen nichtflüchtigen Speicher (Flash) 33 und ein RAM 34 auf, mit denen die Hauptprozessoren 26, 27 über ihre Programm- und Datenspeichereinheit 29-32 über einen Bus (Crossbar) 35 kommunizieren können, sodass die beiden Hauptprozessoren 26, 27 jeweils auf den flüchtigen Speicher 33 und den RAM 34 zugreifen können.

Auf dem flüchtigen Speicher 33 sind Programmdaten und ein Programmablauf für die Motorsteuerung programmiert und der RAM 34 dient als Zwischenspeicher u. A. für von den Hauptprozessoren 26, 27 berechneten Daten.

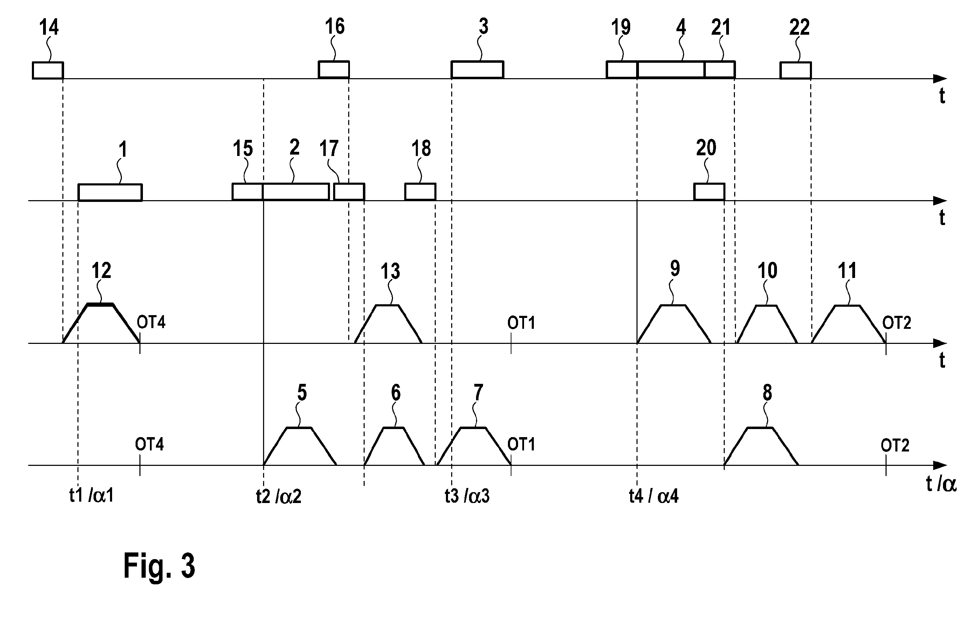

Die Fig. 3 veranschaulicht ein erstes Ausführungsbeispiel, gemäß dem das Einspritzsystem 28 mit einem zwei Hauptprozessoren 26, 27 umfassenden Multi-Core Prozessor 25 verwendet wird. Der Multi-Core Prozessor 25 ist für dieses Ausführungsbeispiel derart programmiert, dass während der statischen Interrupts 1-4 die Ansteuerbeginne der Einspritzungen und während der dynamischen Interrupts 14-22 die entsprechenden Ansteuerdauern berechnet werden. Im Falle des vorliegenden Ausführungsbeispiels werden für das Einspritzsystem die statischen Interrupts synchron zur Kurbelwellenstellung des Verbrennungsmotors in gleichen Winkelabständen erzeugt. Insbesondere werden die statischen Interrupts in einem zeitlichen Abstand voneinander erzeugt, der 720° Kurbelwelle dividiert durch die Anzahl der Zylinder des Verbrennungsmotors entspricht. Somit wird ein statischer Interrupt vor dem oberen Totpunkt des entsprechenden Zylinders erzeugt.

Die den Zylindern des Verbrennungsmotors zugeordneten Interrupts 1-4, 14-22 sind dabei der Zündfolge entsprechend alternierend den beiden Hauptprozessoren 26, 27 zugewiesen. Somit berechnet einer der beiden Hauptprozessoren 26, 27 die Ansteuerbeginne und - dauern eines Zylinders und der andere Hauptprozessor berechnet die Ansteuerbeginne und -dauern des diesem Zylinder vorangegangenen und nachfolgenden Zylinders. Umfasst der Verbrennungsmotor z.B. vier Zylinder, dann berechnet z.B. der ersten Hauptprozessor 26 die Ansteuerbeginne und -dauern des zweiten und vierten Zylinders und der zweite Hauptprozessor 27 die Ansteuerbeginne und -dauern des ersten und dritten Zylinders bei einer angenommenen Zündfolge: 1-2-3-4.

Die Fig. 3 veranschaulicht ausschnittsweise ein solches Szenario:

Der zweite Hauptprozessor 27 beginnt zum Zeitpunkt t1, entsprechend dem Winkel α1, mit der Berechnung der Ansteuerbeginne der beiden Voreinspritzungen 5, 6 des ersten Zylinders während des statischen Interrupts 1 und zum Zeitpunkt t2, entsprechend dem Winkel α2, mit der Berechnung der Ansteuerbeginne der Haupt- und Nacheinspritzungen 7, 8 des ersten Zylinders während des statischen Interrupts 2. Außerdem berechnet der zweite Hauptprozessor 27 während des dynamischen Interrupts 15 den Ansteuerbeginn der Voreinspritzung 5, während des dynamischen Interrupts 17 den Ansteuerbeginn der Voreinspritzung 6, während des dynamischen Interrupts 18 den Ansteuerbeginn der Haupteinspritzung 7 und während des dynamischen Interrupts 20 den Ansteuerbeginn der Nacheinspritzung 8 des ersten Zylinders. Ferner berechnet der zweite Hauptprozessor 27 in nicht dargestellter Weise die entsprechenden Ansteuerbeginne und -dauern des dritten Zylinders. Die dynamischen Interrupts 15, 17, 18, 20 sind derart gelegt, dass der zweite Hauptprozessor 27 die entsprechenden Ansteuerdauern vor den entsprechenden Ansteuerbeginnen der Einspritzungen berechnet.

Der erste Hauptprozessor 26 ist dem zweiten und vierten Zylinder zugeordnet. Er berechnet im Falle des vorliegenden Ausführungsbeispiels während des zum Zeitpunkt t3, entsprechend dem Winkel α3, beginnenden statischen Interrupts 3 die Ansteuerbeginne der beiden Voreinspritzungen 9, 10 des zweiten Zylinders während des zum Zeitpunkt t4, entsprechend dem Winkel α4, beginnenden statischen Interrupts 4 die Ansteuerbeginne der Haupteinspritzung 11 und der nicht dargestellten Nacheinspritzungen des zweiten Zylinders und in nicht dargestellter Weise die Ansteuerbeginne der Einspritztypen des vierten Zylinders während zweier weiterer statischer Interrupts. Außerdem berechnet der erste Hauptprozessor 26 während des dynamischen Interrupts 19 den Ansteuerbeginn der Voreinspritzung 9, während des dynamischen Interrupts 21 den Ansteuerbeginn der Voreinspritzung 10, während des dynamischen Interrupts 22 den Ansteuerbeginn der Haupteinspritzung 11 und während eines nicht dargestellten weiteren dynamischen Interrupts den Ansteuerbeginn der Nacheinspritzung des zweiten Zylinders. Des Weiteren berechnet der erste Hauptprozessor 26 die entsprechenden Ansteuerdauern des vierten Zylinders während dynamischer Interrupts, von denen die dynamischen Interrupts 14, 16 in der Fig. 3 gezeigt sind. Während des dynamischen Interrupts 14 berechnet der erste Hauptprozessor 26 die Ansteuerdauer der Haupteinspritzung 12 und während des dynamischen Interrupts 16 die Ansteuerdauer der Nacheinspritzung 13 des vierten Zylinders. Die dynamischen Interrupts für die Berechnungen der Ansteuerdauern der Einspritztypen des zweiten und vierten Zylinders sind derart gelegt, dass der erste Hauptprozessor 26 die entsprechenden Ansteuerdauern vor den entsprechenden Ansteuerbeginnen der Einspritzungen berechnet.

Durch die in Fig. 3 veranschaulichte Aufteilung der Interrupts auf die beiden Hauptprozessoren 26, 27 wird z.B. eine Überlappung vom dynamischen Interrupts 16 zur Berechnung der Ansteuerdauer der Nacheinspritzung 13 des vierten Zylinders mit den dynamischen Interrupts 15, 17 zur Berechnung der Ansteuerbeginne der Voreinspritzungen 5, 6 des ersten Zylinders vermieden.

Die drehzahlsynchronen und nicht zylinderspezifischen Regler und Funktionen werden im Falle des vorliegende Ausführungsbeispiels abwechselnd von den einzelnen Hauptprozessoren 26, 27 berechnet. Insbesondere werden diese zusätzlichen Berechnungen von dem Hauptprozessor 26, 27 durchgeführt, der gerade keine Einspritzberechnungen, also Berechnungen für einen Ansteuerbeginn oder -dauer durchführt.

In der Fig. 3 sind ferner der Zeitpunkt des oberen Totpunktes des ersten Zylinders mit OT1, der Zeitpunkt des oberen Totpunktes des zweiten Zylinders mit OT2, der Zeitpunkt des oberen Totpunktes des dritten Zylinders mit OT3 und der Zeitpunkt des oberen Totpunktes des vierten Zylinders mit OT4 bezeichnet.

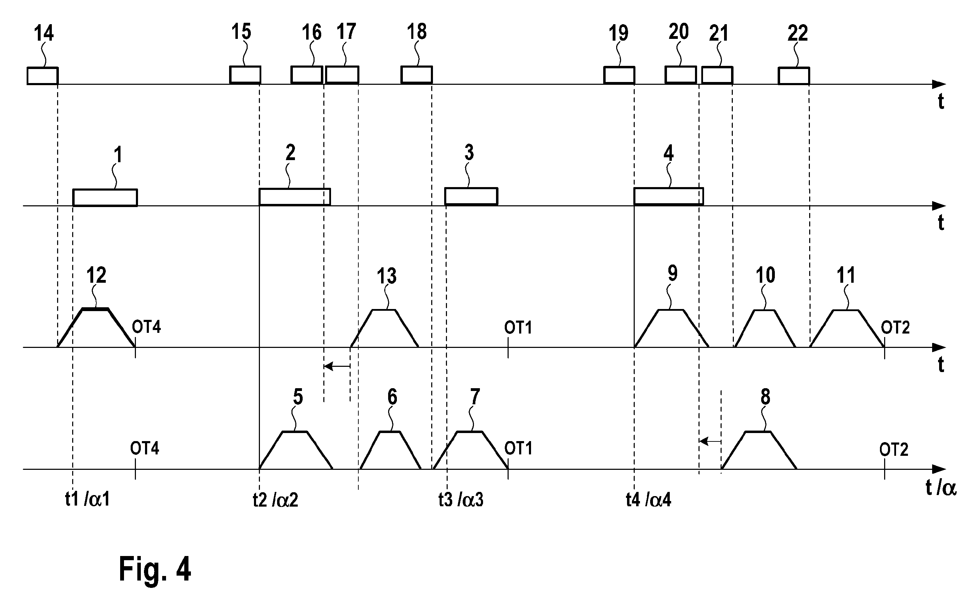

Die Fig. 4 veranschaulicht ein zweites Ausführungsbeispiel, gemäß dem das Einspritzsystem 28 mit einem zwei Hauptprozessoren 26, 27 umfassenden Multi-Core Prozessor 25 verwendet wird. Der Multi-Core Prozessor 25 ist für dieses Ausführungsbeispiel ebenfalls derart programmiert, dass während der statischen Interrupts 1-4 die Ansteuerbeginne der Einspritzungen und während der dynamischen Interrupts 14-22 die entsprechenden Ansteuerdauern berechnet werden. Für dieses Ausführungsbeispiel werden die den statischen Interrupts zugeordneten Berechnungen, also die Ansteuerbeginne aller Einspritztypen aller Zylinder des Verbrennungsmotors, von einem der beiden Hauptprozessoren 26, 27 und die den dynamischen Interrupts zugeordneten Berechnungen, also die Ansteuerdauern, vom anderen Hauptprozessor 26, 27 durchgeführt.

Die Fig. 4 veranschaulicht ein solches Szenario, wobei im Falle des vorliegenden Ausführungsbeispiels ein Verbrennungsmotor mit vier Zylindern zugrunde gelegt ist.

Im Falle des vorliegenden Ausführungsbeispiels berechnet der zweite Hauptprozessor 27 die Ansteuerbeginne der Einspritztypen aller Zylinder während der statischen Interrupts 1-4 und der zweite Hauptprozessor 27 die entsprechenden Ansteuerdauern während der dynamischen Interrupts 14-22.

In der Fig. 4 ist dies ausschnittsweise veranschaulicht. So berechnet im Falle des vorliegenden Ausführungsbeispiels der zweite Hauptprozessor 27 während des statischen Interrupts 1 die Ansteuerbeginne für die beiden aufeinander folgenden Voreinspritzungen 5, 6 und während des darauf folgenden statistischen Interrupts 2 die Ansteuerbeginne der Haupteinspritzung 7 und der Nacheinspritzung 8 des ersten Zylinders. Während des nachfolgenden statischen Interrupts 3 berechnet der zweite Hauptprozessor 27 die Ansteuerbeginne für die beiden aufeinander folgenden Voreinspritzungen 9, 10 und während des nächsten statistischen Interrupts 5 die Ansteuerbeginne der Haupteinspritzung 11 und der nicht gezeigten Nacheinspritzung des zweiten Zylinder. Die Fig. 4 zeigt ferner die Haupteinspritzung 12 und die Nacheinspritzung 13 des vierten Zylinders, die der zweite Hauptprozessor 27 während eines nicht gezeigten weiteren statischen Interrupts berechnet.

Der erste Hauptprozessor 26 berechnet während der dynamischen Interrupts 14-22 die entsprechenden Ansteuerdauern. Insbesondere berechnet der ersten Hauptprozessor 26 während des dynamischen Interrupts 14 die Ansteuerdauern der Haupteinspritzung 12, während des dynamischen Interrupts 15 die Ansteuerdauer der Voreinspritzungen 5 des ersten Zylinders, während des dynamischen Interrupts 16 die Ansteuerdauer der Nacheinspritzung 13 des vierten Zylinders, während des dynamischen Interrupts 17 die Ansteuerdauer der Voreinspritzungen 6 des ersten Zylinders, während des dynamischen Interrupt 18 die Ansteuerdauer der Haupteinspritzung 7 des ersten Zylinders, während des dynamischen Interrupts 19 die Ansteuerdauer der Voreinspritzung 9 des zweiten Zylinders, während des dynamischen Interrupts 20 die Ansteuerdauer der Nacheinspritzung 8 des ersten Zylinders, während des dynamischen Interrupts 21 die Ansteuerdauer der Voreinspritzung 10 des zweiten Zylinders und während des dynamischen Interrupts 22 die Ansteuerdauer der Haupteinspritzungen 11 des ersten Zylinders.

Durch die Aufteilung der statischen und der dynamischen Interrupts auf die beiden Hauptprozessoren 26, 27 können die dynamischen Interrupts keinen statischen Interrupt unterbrechen. Somit ist es möglich, den Vorhalt eines statischen Interrupts näher vor dem frühesten zugelassenen applizierten Ansteuerbeginn des jeweiligen Einspritztyps um die Laufzeit des unterbrechenden dynamischen Interrupts verringert heranzuführen. Die Werte für die Ansteuerdauern können somit besser berechnet werden.

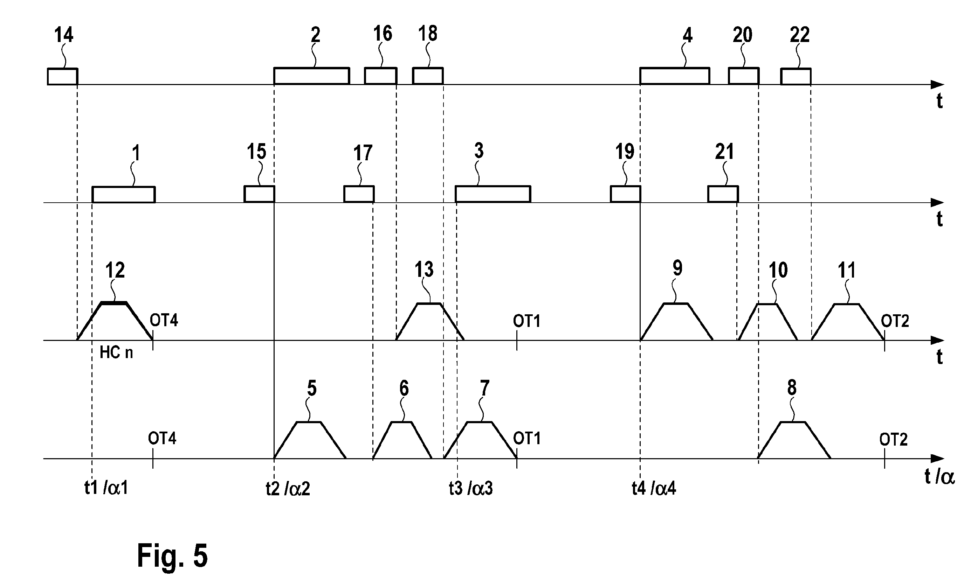

Die Fig. 5 veranschaulicht ein drittes Ausführungsbeispiel, gemäß dem das Einspritzsystem 28 mit einem zwei Hauptprozessoren 26, 27 umfassenden Multi-Core Prozessor 25 verwendet wird. Der Multi-Core Prozessor 25 ist für dieses Ausführungsbeispiel ebenfalls derart programmiert, dass während der statischen Interrupts 1-4 die Ansteuerbeginne der Einspritzungen und während der dynamischen Interrupts 14-22 die entsprechenden Ansteuerdauern berechnet werden. Für dieses Ausführungsbeispiel werden allgemein die Ansteuerbeginne und -dauern der Voreinspritzung aller Zylinder von einem der beiden Hauptprozessoren 26, 27 und die Ansteuerbeginne und -dauern der Haupt- und Nacheinspritzungen aller Zylinder vom anderen Hauptprozessor 26, 27 berechnet.

Im Falle des in der Fig. 5 gezeigten Ausschnitts des Ablaufs dieser Ausführungsform berechnet der zweite Hauptprozessor 27 während des statischen Interrupts 1 die Ansteuerbeginne und während der dynamischen Interrupts 15, 17 die Ansteuerdauern der Voreinspritzungen 5, 6 des ersten Zylinders. Während des statischen Interrupts 3 berechnet der zweite Hauptprozessor 27 die Ansteuerbeginne und während der dynamischen Interrupts 19, 21 die Ansteuerdauern der Voreinspritzungen 9, 10 des zweiten Zylinders.

Die Fig. 5 veranschaulicht ferner die Berechnung der Ansteuerbeginne der Haupt- und Nebeneinspritzungen 7, 8 während des statischen Interrupts 2 des ersten Hauptprozessors 26 und die Berechnung der entsprechenden Ansteuerdauern während der dynamischen Interrupts 16, 18 des ersten Hauptprozessors 26. Ferner zeigt die Fig. 5 den statischen Interrupt 4, während dem der erste Hauptprozessor 26 die Ansteuerbeginne der Haupteinspritzung 11 und der nicht gezeigten Nacheinspritzung des zweiten Zylinders berechnet, und die dynamischen Interrupts 20, 22, während derer der erste Hauptprozessor 26 die Ansteuerdauern der Haupt- und Nacheinspritzungen 11 des zweiten Zylinders berechnet.

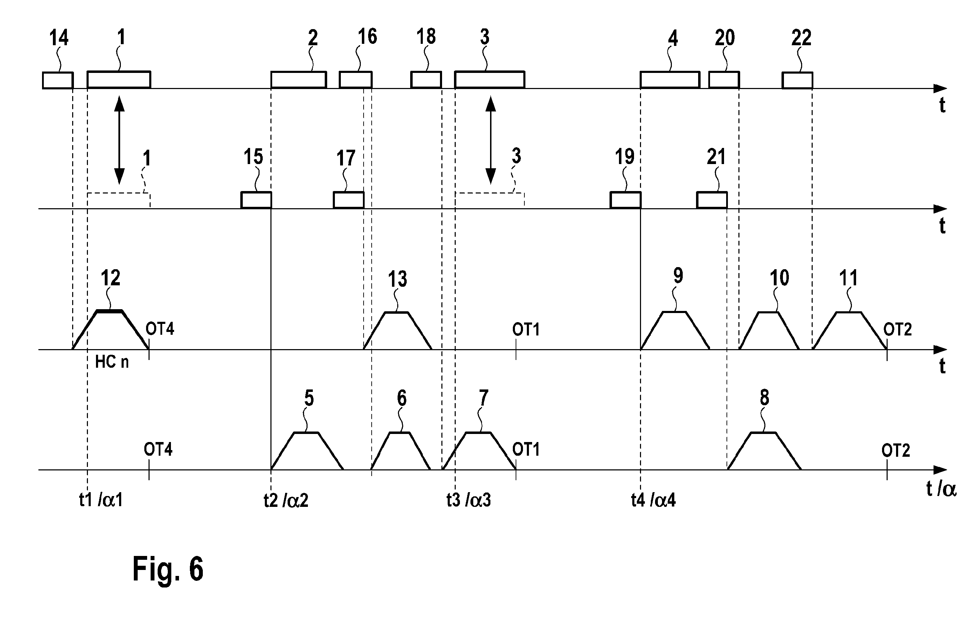

Die Fig. 6 veranschaulicht ein viertes Ausführungsbeispiel, gemäß dem das Einspritzsystem 28 mit einem zwei Hauptprozessoren 26, 27 umfassenden Multi-Core Prozessor 25 verwendet wird. Für dieses Ausführungsbeispiel kann jedoch auch ein Multi-Core Prozessor mit mehr als zwei Hauptprozessoren 26, 27 verwendet werden. Der Multi-Core Prozessor 25 ist für dieses Ausführungsbeispiel ebenfalls derart programmiert, dass während der statischen Interrupts 1-4 die Ansteuerbeginne der Einspritzungen und während der dynamischen Interrupts 14-22 die entsprechenden Ansteuerdauern berechnet werden.

Die Auswahl des Hauptprozessors 26, 27, der eine bestimmte Berechnung (Anwendung, Task) durchführen soll, wird jedoch dynamisch zugewiesen. Somit ist nicht von vornherein festgelegt, welche Berechnungen auf welchem Hauptprozessor 26, 27 abgearbeitet werden sollen. Im Falle des vorliegenden Ausführungsbaispiels sollen dabei die beiden Hauptprozessoren 26, 27 stets die Anwendungen berechnen, die derzeit die höchsten Prioritäten haben. Zur Laufzeit des Einspritzsystems 28 bearbeitet z.B. der erste Hauptprozessor 26 einen bestimmten Prozess in einer bestimmten Anwendung, die zur Zeit eine relativ niedrige Priorität aufweist. Gibt es eine Unterbrechungs-Abfrage (IRQ, Interrupt request), beispielsweise für eine Anwendung die eine höhere Priorität aufweist als die auf dem ersten und zweiten Hauptprozessor 26, 27 laufenden Anwendungen, dann wird die Anwendung mit der niedrigsten Priorität unterbrochen und der entsprechende Hauptprozessor 26, 27 bearbeitet die Anwendung des neuen Interrupts. Hat z.B. die auf dem ersten Hauptprozessor 26 laufende Anwendung eine niedrigere Priorität als die auf dem zweiten Hauptprozessor 27 laufende Anwendung, dann beendet der zweite Hauptprozessor 27 seine Anwendung (kooperativ) und der erste Hauptprozessor 26 unterbricht seine Anwendung (preemtiv), um die Anwendung des Interrupts mit der höheren Priorität zu bearbeiten. Folglich werden immer die Anwendungen mit den beiden derzeitigen höchsten Prioritäten bearbeitet.

Das so genannte Scheduling läuft dabei auf allen Hauptprozessoren 26, 27 synchron ab, d.h. mit demselben Systemtakt, Winkel und Zeitbasis. Unter Scheduling bzw. Scheduling-Konfiguration versteht man die Information, welcher Prozess welchem folgen muss bzw. welche Nachricht vor welcher berechnet werden muss, die Definition der Prioritäten der Anwendungen (Tasks) und welcher Prozess welche Nachricht sendet bzw. empfängt.

Eine Task weist beispielsweise mehrere Prozesse auf, wie z.B. Luftmassenberechnung, oder das Erfassen von Werten des Gaspedals.

Die Tatsache, dass für dieses Ausführungsbeispiel die Berechnungen der einzelnen Ansteuerbeginne und -dauern nicht bestimmten Hauptprozessoren 26, 27 fest vorgegeben sind, ist in der Fig. 6 beispielsweise durch die statischen Interrupts 1, 3 dargestellt, die auf dem ersten Hauptprozessor 26 (durchgezogenen Linien) oder auf dem zweiten Hauptprozessor 27 (gestrichelte Linen) laufen können. Dasselbe gilt auch für die restlichen Interrupts.

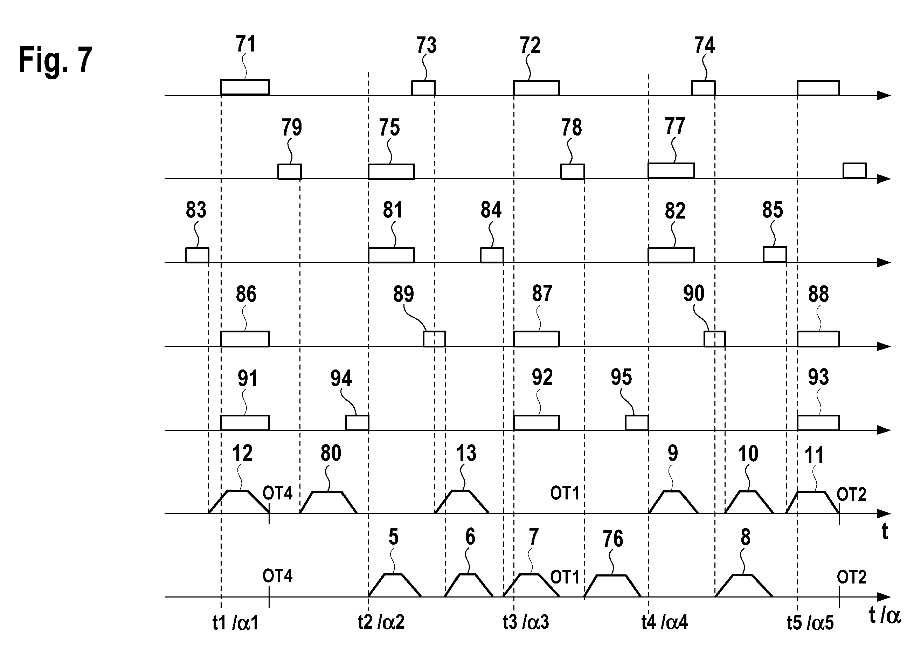

Die Fig. 7 zeigt einen Ausschnitt einer Ablaufsteuerung eines fünften Ausführungsbeispiels. Für dieses Ausführungsbeispiel ist die Anzahl der Hauptprozessoren des Multi-Core Prozessors 25 gleich der Anzahl der Einspritztypen pro Zylinder.

Im Falle des in der Fig. 7 gezeigten Ausführungsbeispiels sind jedem Zylinder fünf Einspritztypen zugeordnet, sodass der Multi-Core Prozessor 25 für diese Ausführungsbeispiel fünf Hauptprozessoren umfasst. Die fünf Einspritztypen sind:
- eine Haupteinspritzung,
- eine der Haupteinspritzung vorangehende erste Voreinspritzung,
- eine der ersten Voreinspritzung vorangehende zweite Voreinspritzung
- eine der Haupteinspritzung nachfolgende erste Nacheinspritzung und
- eine der ersten Nacheinspritzung vorhergehenden zweite Nacheinspritzung.

D.h. dass im Gegensatz zu den weiter oben beschriebenen Ausführungsbeispielen in dem in der Fig. 7 gezeigten Ausführungsbeispiel jedem Zylinder zwei Nacheinspritzungen anstelle von nur einer Nacheinspritzung zugeführt werden.

Im Falle des in der Fig. 2 illustrierten Ausführungsbeispiels ist jedem der fünf Einspritztypen einer der fünf Hauptprozessoren 26, 27 zugeordnet. Die einzelnen Hauptprozessoren 26, 27 berechnen demnach die Ansteuerbeginne und -dauern der ihnen zugeordneten Einspritztypen getrennt von den restlichen Einspritztypen.

Im Falle des vorliegenden Ausführungsbeispiels berechnet der erste Hauptprozessor 26 die Ansteuerbeginne und -dauern der ersten Nacheinspritzung, der zweite Hauptprozessor 27 die Ansteuerbeginne und -dauern der zweiten Nacheinspritzung, der nicht näher dargestellte dritte Hauptprozessor die Ansteuerbeginne und -dauern der Haupteinspritzung, der nicht näher gezeigte vierte Hauptprozessor die Ansteuerbeginne und -dauern der ersten Voreinspritzung und der nicht näher gezeigte fünfte Hauptprozessor die Ansteuerbeginne und - dauern der zweiten Voreinspritzung.

In dem in de Fig. 7 dargestellten Ausführungsbeispiel ist nur ein Ausschnitt des Ablaufs der Zylinderansteuerung gezeigt:

Der erste Hauptprozessor 26 berechnet während eines zum Zeitpunkt t1, entsprechend dem Winkel α1, beginnenden statischen Interrupts 71 den Ansteuerbeginn der ersten Nacheinspritzung 13 des vierten Zylinders, während eines zum Zeitpunkt t3, entsprechend dem Winkel α3, beginnenden statischen Interrupt 72 den Ansteuerbeginn der ersten Nacheinspritzung 8 des ersten Zylinders, während eines dynamischen Interrupts 73 die Ansteuerdauer der ersten Nacheinspritzung 13 des vierten Zylinders kurz vor deren Beginn und während eines weitern dynamischen Interrupts 74 die Ansteuerdauer der ersten Nacheinspritzung 8 des ersten Zylinders kurz vor deren Beginn.

Der zweite Hauptprozessor 27 berechnet während eines zum Zeitpunkt t2, entsprechend dem Winkel α2, beginnenden statischen Interrupts 75 den Ansteuerbeginn die zweiten Nacheinspritzung 76 des ersten Zylinders, während eines zum Zeitpunkt t4, entsprechend dem Winkel α4, beginnenden statischen Interrupts 77 den Ansteuerbeginn der nicht gezeigten zweiten Nacheinspritzung des zweiten Zylinders, während eines dynamischen Interrupts 78 die Ansteuerdauer der zweiten Nacheinspritzung 76 des ersten Zylinders kurz vor deren Beginn und während eines dynamischen Interrupts 79 die Ansteuerdauer der zweiten Nacheinspritzung 80 des vierten Zylinders kurz vor deren Beginn.

Der in den Figuren nicht gezeigte dritte Hauptprozessor berechnet während eines zum Zeitpunkt t2, entsprechend dem Winkel α2, beginnenden statischen Interrupts 81 den Ansteuerbeginn der Haupteinspritzung 7 des ersten Zylinders, während eines zum Zeitpunkt t4, entsprechend dem Winkel α4, beginnenden statischen Interrupts 82 den Ansteuerbeginn der Haupteinspritzung 11 des zweiten Zylinders, während eines dynamischen Interrupts 83 die Ansteuerdauer der Hauptspritzung 12 des vierten Zylinders kurz vor deren Beginn, während eines dynamischen Interrupts 84 die Ansteuerdauer der Haupteinspritzung 7 des ersten Zylinders kurz vor deren Beginn und während eines dynamischen Interrupts 85 die Ansteuerdauer der Haupteinspritzung 11 des zweiten Zylinders kurz vor deren Beginn.

Der in den Figuren nicht gezeigte vierte Hauptprozessor berechnet während eines zum Zeitpunkt t1, entsprechend dem Winkel α1, beginnenden statischen Interrupts 86 den Ansteuerbeginn der ersten Voreinspritzung 6 des ersten Zylinders, während eines zum Zeitpunkt t3, entsprechend dem Winkel α3, beginnenden statischen Interrupts 87 den Ansteuerbeginn der ersten Voreinspritzung 10 des zweiten Zylinders, während eines zum Zeitpunkt t5, entsprechend dem Winkel α5, beginnenden statischen Interrupts 88 den Ansteuerbeginn der nicht gezeigten ersten Voreinspritzung des dritten Zylinders, während eines dynamischen Interrupts 89 die Ansteuerdauer der ersten Voreinspritzung 6 des ersten Zylinders kurz vor deren Beginn und während eines weiteren dynamischen Interrupts 90 die Ansteuerdauer der ersten Voreinspritzung 10 des zweiten Zylinders kurz vor deren Beginn.

Der in den Figuren nicht gezeigte fünfte Hauptprozessor berechnet während eines zum Zeitpunkt t1, entsprechend dem Winkel α1, beginnenden statischen Interrupts 91 den Ansteuerbeginn der zweiten Voreinspritzung 5 des ersten Zylinders, während eines zum Zeitpunkt t3, entsprechend dem Winkel α3, beginnenden statischen Interrupts 92 den Ansteuerbeginn der zweiten Voreinspritzung 9 des zweiten Zylinders, während eines zum Zeitpunkt t5, entsprechend dem Winkel α5, beginnenden statischen Interrupts 93 den Ansteuerbeginn der nicht gezeigten zweiten Voreinspritzung des dritten Zylinders, während eines dynamischen Interrupts 94 die Ansteuerdauer der zweiten Voreinspritzung 5 des ersten Zylinders kurz vor deren Beginn und während eines weiternden dynamischen Interrupts 95 die Ansteuerdauer der zweiten Voreinspritzung 9 des zweiten Zylinders kurz vor deren Beginn.

Diese Ausführungsform ist dann vorteilhaft, wenn die Rechenzeit und damit die Dauer der dynamischen Interrupts relativ lange dauert und eine Aneinanderreihung aller dynamischen Interruptlaufzeiten mit einem Single-Core Prozessor nicht mehr darstellbar ist bzw. der Abstand bzw. Zeit/Winkel Vorhalt der dynamischen Interrupts zum Einspritzbeginn zu groß wird.

Die drehzahlsynchronen und nicht zylinderspezifischen Regler und Funktionen werden im Falle des vorliegende Ausführungsbeispiels abwechselnd von den einzelnen Hauptprozessoren 26, 27 berechnet. Insbesondere werden diese zusätzlichen Berechnungen von den Hauptprozessoren 26, 27 durchgeführt, die gerade keine Einspritzberechnungen, also Ansteuerbeginn und -dauer berechnen.

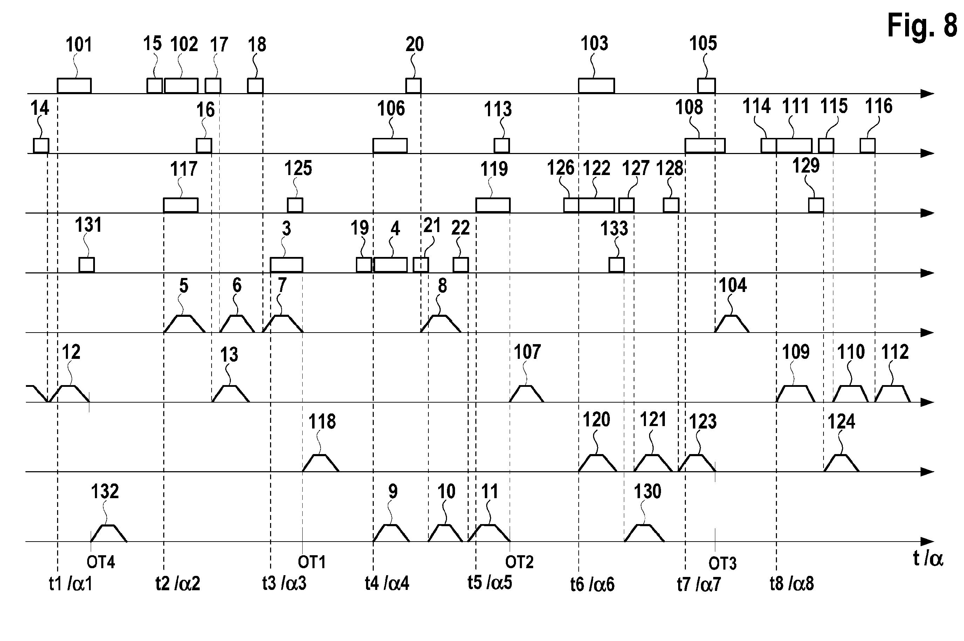

Die Fig. 8 zeigt einen Ausschnitt eines Ablaufdiagramms eines sechsten Ausführungsbeispiels. Für dieses Ausführungsform ist jeweils ein Hauptprozessor des Multi-Core Prozessors 25 einer Einspritzbank des Verbrennungsmotors zugeordnet, d.h. führt die Einspritzberechnungen, also die Berechnungen der entsprechenden Ansteuerbeginne und -dauern bzw. -enden der Zylinder einer Einspritzbank durch. Unter einer Einspritzbank versteht man eine Reihe von Zylindern in einem Motorblock. Im Extremfall kann eine Einspritzbank einen einzigen Zylinder umfassen, was im vorliegenden Ausführungsbeispiel der Fall ist.

Ziel ist es, die Zylinder (Einspritzungen) so zu verteilen, dass die Zylinder auf einer Bank den maximal möglichen Abstand auf der jeweiligen Bank haben. Man kann auch einen VierZylinder Motor auf vier Einspritzbänke realisieren. Dann hat jeder Zylinder 720° Kurbelwelle Einspritzbereich.

Im Falle des vorliegenden Ausführungsbeispiel umfasst der Verbrennungsmotor vier Zylinder. Demnach umfasst der Multi-Core Prozessor 25 vier Hauptprozessoren. Jeweils ein Hauptprozessor ist einem der vier Zylinder zugeordnet, d.h. berechnet die entsprechenden Ansteuerbeginne und -dauern der Einspritztypen dieses Zylinders. Im Falle des vorliegenden Ausführungsbeispiels ist der erste Hauptprozessor 26 dem ersten Zylinder, der zweite Hauptprozessor 27 dem vierten Zylinder, der nicht dargestellte dritte Hauptprozessor dem dritten Zylinder und der nicht dargestellte vierte Hauptprozessor dem zweiten Zylinder zugeordnet.

Der erste Hauptprozessor 26 berechnet während eines zum Zeitpunkt t1, entsprechend dem Winkel α1, beginnenden statischen Interrupts 101 die Ansteuerbeginne der beiden Voreinspritzungen 5, 6, während des zum Zeitpunkt t2, entsprechend dem Winkel α2, beginnenden statischen Interrupts 102 die Ansteuerbeginne der Haupt- und Nacheinspritzungen 7, 8 und während eines zum Zeitpunkt t6, entsprechend dem Winkel α6, beginnenden statischen Interrupts 103 den Ansteuerbeginn einer weitern Voreinspritzungen 104 des ersten Zylinder. Die weitere Voreinspritzung 104 gehört zum nächsten Einspritzzyklus (Zylinder 1), der in der Fig. 8 nicht gezeigt ist.

Außerdem berechnet der erste Hauptprozessor 26 während des dynamischen Interrupts 15 den Ansteuerbeginn der Voreinspritzung 5, während des dynamischen Interrupts 17 den Ansteuerbeginn der Voreinspritzung 6, während des dynamischen Interrupts 18 den Ansteuerbeginn der Haupteinspritzung 7, während des dynamischen Interrupts 20 den Ansteuerbeginn der Nacheinspritzung 8 und während eines dynamischen Interrupts 105 den Ansteuerbeginn der Voreinspritzung 104 des ersten Zylinders.

Der zweite Hauptprozessor 27 berechnet während eines zum Zeitpunkt t4, entsprechend dem Winkel α4, beginnenden statischen Interrupts 106 den Ansteuerbeginn einer frühen Voreinspritzung 107, während eines zum Zeitpunkt t7, entsprechend dem Winkel α7, beginnenden statischen Interrupts 108 die Ansteuerbeginne der Voreinspritzungen 109, 110 und während eines zum Zeitpunkt t8, entsprechend dem Winkel α8, beginnenden statischen Interrupts 111 die Ansteuerbeginne einer Haupteinspritzung 112 und einer nicht gezeigten Nacheinspritzungen des vierten Zylinders.

Außerdem berechnet der zweite Hauptprozessor 27 während des dynamischen Interrupts 14 den Ansteuerbeginn der Haupteinspritzung 12, während des dynamischen Interrupts 16 den Ansteuerbeginn der Nacheinspritzung 13, während eines dynamischen Interrupts 113 den Ansteuerbeginn der frühen Voreinspritzung 107, während eines dynamischen Interrupts 114 den Ansteuerbeginn der Voreinspritzung 109, während eines dynamischen Interrupts 115 den Ansteuerbeginn der Voreinspritzung 110 und während eines dynamischen Interrupts 116 den Ansteuerbeginn der Haupteinspritzung 112 des vierten Zylinders.

Der nicht dargestellt dritte Hauptprozessor berechnet während eines zum Zeitpunkt t2, entsprechend dem Winkel α2, beginnenden statischen Interrupts 117 den Ansteuerbeginn einer frühen Voreinspritzung 118, während eines zum Zeitpunkt t5, entsprechend dem Winkel α5, beginnenden statischen Interrupts 119 die Ansteuerbeginne von Voreinspritzungen 120, 121 und während eines zum Zeitpunkt t6, entsprechend dem Winkel α6, beginnenden statischen Interrupts 122 die Ansteuerbeginne einer Haupteinspritzung 123 und einer Nacheinspritzungen 124 des dritten Zylinders.

Außerdem berechnet der dritte Hauptprozessor während eines dynamischen Interrupts 125 den Ansteuerbeginn der frühen Voreinspritzung 128, während eines dynamischen Interrupts 126 den Ansteuerbeginn der Voreinspritzung 120, während eines dynamischen Interrupts 127 den Ansteuerbeginn der Voreinspritzung 121, während eines dynamischen Interrupts 128 den Ansteuerbeginn der Haupteinspritzung 123 und während eines dynamischen Interrupts 129 den Ansteuerbeginn der Nacheinspritzung 124 des dritten Zylinders.

Der nicht dargestellte vierte Hauptprozessor berechnet während des zum Zeitpunkt t3, entsprechend dem Winkel α3, beginnenden statischen Interrupts 3 die Ansteuerbeginne der beiden Voreinspritzungen 9,10 und während des zum Zeitpunkt t4, entsprechend dem Winkel α4, beginnenden statischen Interrupts 4 die Ansteuerbeginne der Haupt- und Nacheinspritzungen 11, 130 des zweiten Zylinders.

Außerdem berechnet der vierte Hauptprozessor während eines dynamischen Interrupts 131 den Ansteuerbeginn einer frühen Voreinspritzung 132, während des dynamischen Interrupts 19 den Ansteuerbeginn der Voreinspritzung 9, während des dynamischen Interrupts 21 den Ansteuerbeginn der Voreinspritzung 10, während des dynamischen Interrupts 22 den Ansteuerbeginn der Haupteinspritzung 11 und während eines dynamischen Interrupts 133 den Ansteuerbeginn der Nacheinspritzung 130 des zweiten Zylinders.

Für eine Sicherheitskonzept kann es ferner wichtig sein, Berechnungen für die Ansteuerdauern bzw. Kraftstoffmengen für die entsprechenden Einspritztypen zu plausibilisieren oder wiederholt durchzuführen. In den beschriebene Ausführungsbeispielen kann es daher zusätzlich vorgesehen sein, dass zwei Hauptprozessoren 26, 27 parallel kritische Berechnungen durchführen und anschließend der Multi-Core Prozessor 25 die Ergebnisse dieser Berechnungen vergleicht. Es kann dann vorgesehen sein, dass die Ansteuerung für den Zylinder nur dann vorgenommen wird, wenn die beiden Ergebnisse übereinstimmen.

Eine andere Möglichkeit der Plausibilisierung ist es, dass einer der Hauptprozessoren die Ergebnisse eines anderen Hauptprozessors zurückrechnet, z.B. mittels inverser Algorithmen, inverser Kennfelder und Kennlinien, usw. Der Effekt/ Nutzen diese Variante ist eine relativ schnelle Rechnung und Plausibilisierung sicherheitskritischer Routinen.

Die Fig. 9 zeigt noch ein Kraftfahrzeug 134 mit dem in der Fig. 2 gezeigten Einspritzsystem 28 und einem Verbrennungsmotor 135, dessen Zylinder von dem Einspritzsystem angesteuert werden.

## Patentansprüche

1. Einspritzsystem zur Ansteuerung der Zylinder eines Verbrennungsmotors (135), aufweisend einen Multi-Core Prozessor (25) mit einer Mehrzahl von Hauptprozessoren (26, 27), wobei im Betrieb des Verbrennungsmotors (133) Kraftstoff in die Zylinder wenigstens zweier verschiedener Einspritztypen (5-13) eingespritzt wird, der Multi-Core Prozessor (25) während synchron zur Stellung der Kurbelwelle des Verbrennungsmotors (133) erzeugter statischer Interrupts (1-4) die Ansteuerbeginne der Einspritztypen (5-13) und während dynamischer Interrupts (14-22) mit einer höheren Priorität als die statischen Interrupts (1-4) die Ansteuerdauern der Einspritztypen (5-13) berechnet, und die Berechnung der Ansteuerbeginne und - dauern auf die Hauptprozessoren (26, 27) verteilt ist.

2. Einspritzsystem nach Anspruch 1, bei dem jeweils ein Hauptprozessor (26, 27) die Ansteuerbeginne und -dauern eines Einspritztyps der Einspritztypen (5-13) berechnet.

3. Einspritzsystem nach Anspruch 1, bei dem der Zündfolge der Einspritztypen (5-13) entsprechend alternierend die den Zylindern zugeordneten Interrupts (1-4, 14-22) den Hauptprozessoren (26, 27) zugeordnet sind.

4. Einspritzsystem nach Anspruch 1, bei dem der Verbrennungsmotor (135) mehrer Einspritzbänke aufweist und jeder Einspritzbank ein Hauptprozessor (26, 27) zur Berechnung der Ansteuerzeitpunkte und -dauern der entsprechenden Zylinder zugeordnet ist.

5. Einspritzsystem nach Anspruch 1, bei dem jedem Zylinder ein Hauptprozessor (26, 27) zur Berechnung der Ansteuerzeitpunkte und -dauern des entsprechenden Zylinder zugeordnet ist.

6. Einspritzsystem nach Anspruch 1, bei dem die statischen Interrupts (1-4) einem ersten Hauptprozessor (27) der Mehrzahl von Hauptprozessoren und die dynamischen Interrupts (14-22) einem zweiten Hauptprozessor (26) der Mehrzahl von Hauptprozessoren zugeordnet sind.

7. Einspritzsystem nach Anspruch 1, bei dem die Einspritztypen eine Haupteinspritzung (7, 11, 12), wenigstens eine der Haupteinspritzung (7, 11, 12) vorangehende Voreinspritzung (5, 6, 9, 10) und wenigstens eine der Haupteinspritzung (7, 11, 12) nachfolgende Nacheinspritzung (8, 13) umfasst und ein erster Hauptprozessor (27) der Mehrzahl von Hauptprozessoren die Ansteuerbeginne und -dauern der wenigstens einen Voreinspritzung (5, 6, 9, 10) und ein zweiter Hauptprozessor (26) der Mehrzahl von Hauptprozessoren die Ansteuerbeginne und -dauern der Haupteinspritzung (7, 11, 12) und der wenigstens einen Nacheinspritzung (8, 13) berechnet.

8. Einspritzsystem nach Anspruch 1, bei dem die Berechnungen der Ansteuerbeginne und Ansteuerdauern den verschiedenen Hauptprozessoren (26, 27) der Mehrzahl von Hauptprozessoren dynamisch zugewiesen werden.

9. Einspritzsystem nach Anspruch 8, bei dem die Berechnungen der Ansteuerbeginne und Ansteuerdauern den verschiedenen Hauptprozessoren (26, 27) der Mehrzahl von Hauptprozessoren derart dynamisch zugewiesen werden, dass stets der Anzahl von Hauptprozessoren (26, 27) entsprechend die Anwendungen der Interrupts (1-4, 14-22) mit den zur Zeit höchsten Prioritäten durchgeführt werden.

10. Einspritzsystem nach einem der Ansprüche 1 bis 9, bei dem wenigstens zwei Hauptprozessoren (26, 27) dieselbe Berechnung durchführen und die Ergebnisse beider Berechnungen gegenseitig plausibilisiert werden.

11. Verfahren zum Ansteuern von Einspritzvorgängen eine Mehrzahl von Einspritztypen für die Zylinder eines Verbrennungsmotors (135), aufweisend folgende Verfahrensschritte:
- Erzeugen von synchron zur Stellung der Kurbelwelle des Verbrennungsmotors (135) statischen Interrupts (1-4), während derer ein eine Mehrzahl von Hauptprozessoren (26, 27) aufweisender Multi-Core Prozessors (25) die Ansteuerbeginne für Einspritzvorgänge der Mehrzahl von Einspritztypen (5-13) für die Zylinder eines Verbrennungsmotors (133) berechnet, und
- Erzeugen von dynamischen Interrupts (14-22) mit einer höheren Priorität als die statischen Interrupts (1-4), während derer der Multi-Core Prozessors (25) die Ansteuerdauern für die Einspritzvorgänge berechnet, wobei die Berechnung der Ansteuerbeginne und - dauern auf die Hauptprozessoren (26, 27) verteilt ist.

12. Verfahren nach Anspruch 11, aufweisend folgenden Verfahrensschritt:
- Berechnen der Ansteuerbeginne und -dauern eines Einspritztyps (5-13) mit jeweils einem der Hauptprozessoren (26, 27) des Multi-Core Prozessors (25).

13. Verfahren nach Anspruch 11, bei dem der Zündfolge der Einspritztypen (5-13) entsprechend alternierend die den Zylindern zugeordneten Interrupts (1-4, 14-22) den Hauptprozessoren (26, 27) zugeordnet sind.

14. Verfahren nach Anspruch 11, bei dem der Verbrennungsmotor (135) mehrer Einspritzbänke mit wenigstens einem Zylinder aufweist und das Verfahren folgenden Verfahrensschritt aufweist:
- Berechnen der Ansteuerbeginne und -dauern für die Zylinder jeweils einer Einspritzbank mit genau einem der Hauptprozessoren (26, 27).

15. Verfahren nach Anspruch 11, aufweisend folgenden Verfahrensschritt:
- Berechnen der Ansteuerbeginne und -dauern für jeden Zylinder mit genau einem Hauptprozessor (26, 27).

16. Verfahren nach Anspruch 11, aufweisend folgende Verfahrensschritte:
- Berechnen der Ansteuerbeginne der Einspritztypen (5-13) während der statischen Interrupts (1-4) mit einem ersten Hauptprozessor (27) der Mehrzahl von Hauptprozessoren und
- Berechnen der Ansteuerdauern der Einspritztypen (5-13) während der dynamischen Interrupts (14-22) mit einem zweiten Hauptprozessor (26) der Mehrzahl von Hauptprozessoren

17. Verfahren nach Anspruch 11, bei dem die Einspritztypen eine Haupteinspritzung (7, 11, 12), wenigstens eine der Haupteinspritzung (7, 11, 12) vorangehende Voreinspritzung (5, 6, 9, 10) und wenigstens eine der Haupteinspritzung (7, 11, 12) nachfolgende Nacheinspritzung (8, 13) umfasst und das Verfahren folgende Verfahrensschritte aufweist:
- Berechnen der Ansteuerbeginne und -dauern der wenigsten einen Voreinspritzung (5, 6, 9, 10) mit einem ersten Hauptprozessor (27) der Mehrzahl von Einspritztypen und
- Berechnen der Ansteuerbeginne und -dauern der Haupteinspritzung (7, 11, 12) und der wenigstens einen Nacheinspritzung (8, 13) mit einem zweiten Hauptprozessor (26) der Mehrzahl von Hauptprozessoren

18. Verfahren nach Anspruch 11, bei dem die Berechnungen der Ansteuerbeginne und Ansteuerdauern den verschiedenen Hauptprozessoren (26, 27) der Mehrzahl von Hauptprozessoren dynamisch zugewiesen werden.

19. Verfahren nach Anspruch 18, bei dem die Berechnungen der Ansteuerbeginne und Ansteuerdauern den verschiedenen Hauptprozessoren (26, 27) der Mehrzahl von Hauptprozessoren derart dynamisch zugewiesen werden, dass stets der Anzahl von Hauptprozessoren entsprechend die Anwendungen der Interrupts (1-4, 14-22) mit den zur Zeit höchsten Prioritäten durchgeführt werden.

20. Verfahren nach einem der Ansprüche 11 bis 19, aufweisend folgende Verfahrensschritte.
- Durchführen derselben Berechnung mit wenigstens zwei Hauptprozessoren (26, 27) und
- Plausibilisieren der Ergebnisse der Berechnungen durch Vergleichen der Ergebnisse der beiden Berechnungen.

21. Kraftfahrzeug mit einem Verbrennungsmotor (133) und einem Einspritzsystem (28) nach einem der Ansprüche 1 bis 10.

22. Verwendung eines Multi-Core Prozessors (28) zur Berechnung der Ansteuerbeginne und -dauern für die Steuerung der Einspritzvorgänge für die Zylinder eines Verbrennungsmotors.
